# EUROPEAN PATENT APPLICATION

(11) **EP 2 887 724 A1**
(43) Date of publication of application: **24.06.2015**
(21) Application number: 13306805.6
(22) Date of filing: 20.12.2013
(51) Int. Cl.: H04W 16/32, H04W 52/02, H04W 84/04

(54) **Idle mode control for wireless communication network nodes**

(71) Applicant: ALCATEL LUCENT, 92100 Boulogne-Billancourt (FR)
(72) Inventor: Claussen, Holger, DUBLIN, 15 (IE); Razavi, Rouzbeh, Dublin, 15 (IE)
(74) Representative: Mills, Julia

(57) **Abstract**

A method of controlling an idle state of a smaller wireless telecommunication network node is disclosed. The smaller wireless telecommunication network node is configured to provide radio coverage within a smaller cell and is located within a wireless network comprising a plurality of wireless telecommunications network nodes, including a larger network node providing radio coverage within a larger cell than the smaller cell, the smaller cell being located at least partially within the larger cell. The method comprising: receiving a location indicator signal, the location indicator signal providing an indication of a location of a user equipment relative to at least some of the plurality of wireless telecommunication nodes; determining from the location indicator signal and from network node radio coverage data stored in a data store in the larger network node whether it may be advantageous for at least one of network efficiency and providing a good service for the user equipment to connect to one of the at least one smaller wireless telecommunication network nodes and if so whether the one of the at least one smaller wireless telecommunication network nodes is currently in an idle state; and if so transmitting a wake up signal to the one of the at least one smaller wireless telecommunication network nodes.

## Description

### FIELD OF THE INVENTION

The field of the invention relates to methods and computer programs for controlling the transitioning of network nodes from an active to an idle state and network nodes configured to transition between these modes and to control such transitions.

### BACKGROUND

Wireless communication networks are known and are generally arranged in a cellular system where radio coverage is provided to user equipment, for example, mobile telephones, by geographical area. Those geographical areas of radio coverage are known as cells. A base station is located in each geographical area to provide the required radio coverage. User equipment in the area served by a base station receives information and data from that base station and transmits information and data to that base station.

Information and data transmitted by a base station to user equipment occurs on channels of radio carriers known as downlink carriers. Information and data transmitted by user equipment to a base station occurs on uplink channels of radio carriers known as uplink carriers.

Typically, network connectable devices in each cell are operable to receive information and data from a base station and to transmit information and data to a base station. User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Traditional base stations provide coverage in relatively large geographical areas and those cells are often referred to as macro cells. Typically these base stations provide radio coverage over several hundred metres. It is possible to provide smaller-sized cells within macro cells, these cells have the same or similar capabilities as the macro cells but have a much reduced geographical coverage. Such smaller sized cells are sometimes referred to as micro cells, pico cells or femto cells. One way to establish a small cell is to provide a small cell base station that provides coverage having a relatively limited range typically tens of metres, within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

In particular, as demand for wireless multimedia services grows meeting this increasing traffic demand at a low cost has become a major challenge for network operators. Deploying small cells is widely accepted as a good solution for achieving significant capacity gains. Essentially, the wireless network capacity can be increased linearly with the number of deployed small cells within the same spectrum.

One major challenge for operator deployed small cells is the operation and deployment cost of such cells. Here the main issue is the provision of both power and backhaul, which make today's small cell deployment expensive. One key enabler for this solution is efficient idle mode control, which allows the cell to conserve its energy while not serving users.

H. Claussen, I. Ashraf, and L. T. W. Ho, "Dynamic idle mode procedures for femtocells," Bell Labs Technical Journal, vol. 15, no. 2, pp. 95-116, Aug. 2010 proposed a distributed wakeup mechanism in which a small cell monitor the uplink transmissions to the nearest macrocell to trigger a wakeup if the mobile is within range of the small cell. This allowed all components except for this uplink "sniffer" to be put into sleep mode until a call needs to be serviced. During sleep mode the cell would not even transmit the usual pilot signals.

This solution can significantly reduce the energy consumption but has the following limitations:
- The small cell needs to listen for user equipment (the "sniffer") and thus, uses some power; and
- wake ups may occur unnecessarily which increases power consumption.

The latter may occur because as the decision for the small cell to wake up is made in a decentralized manner, the small cell cannot take information from other cells into account. As a result the small cell may wake up when the macrocell network is not fully loaded and can handle itself the request. Furthermore, in multi-tier networks (macro, micro, metro, pico, femto) multiple tiers may wake up unnecessarily. For example if a call is within coverage of a femtocell, which is located within a picocell, which again is located within a metrocell, the UE communication to the macrocell may wake all of them up.
Furthermore, in some cases the user may be mobile, and the small cell may not be suitable for handling the call but may still be woken up.

It would be desirable to be able to decrease the power consumption of small cells without unduly reducing their capabilities to handle calls.

### SUMMARY

A first aspect of the present invention provides a method of controlling an idle state of at least one smaller wireless telecommunication network node, said at least one smaller wireless telecommunication network node configured to provide radio coverage within a smaller cell and being located within a wireless network comprising a plurality of wireless telecommunications network nodes, at least one of said plurality of wireless telecommunication network nodes comprising a larger network node providing radio coverage within a larger cell than said smaller cell, said smaller cell being located at least partially within said larger cell, said method comprising: receiving a location indicator signal, said location indicator signal providing an indication of a location of a user equipment relative to at least some of said plurality of wireless telecommunication nodes; determining from said location indicator signal and from network node radio coverage data stored in a data store in said larger network node whether it may be advantageous for at least one of network efficiency and providing a good service for said user equipment to connect to one of said at least one smaller wireless telecommunication network nodes and if so whether said one of said at least one smaller wireless telecommunication network nodes is currently in an idle state; and if so transmitting a wake up signal to said one of said at least one smaller wireless telecommunication network nodes.

The present invention recognises that although the use of the idle mode in the prior art reduces the power consumption of smaller network nodes, the need in the previous techniques to be able to detect nearby user equipment and power up in response to this, resulted in considerable power consumption in both powering the detecting equipment and in unnecessary wake ups. The present invention addresses this by providing a more centralised technique where a larger network node controls the wake up of the smaller network nodes using a wake up signal. By placing the control not in the smaller network nodes themselves, but more centrally in the larger network node a more centralised technique that can use other information that it has access to such as radio coverage when deciding whether to wake the smaller base stations up. This can reduce unnecessary wake ups and thereby reduce the power consumption of the smaller base stations. Furthermore, by placing the control in the larger network node, the smaller base stations no longer need to power detection circuitry for detecting nearby use equipment which again decreases their power consumption.

The problem of identifying remotely at the larger network node the location of the user equipment relative to the smaller base station while it is in idle mode and not transmitting any pilot signals, is addressed by using stored network node radio coverage data and comparing this data with location indication signals received from user equipment. The location indication signals can be compared with the stored radio coverage data to determine the location of the user equipment relative to neighbouring network nodes, and from this it can be determined whether the user equipment is close to one of the smaller network nodes, even when the smaller network is not currently transmitting a pilot signal or indeed any signal. From this information it can be determined whether it may be advantageous to connect the user equipment to that smaller wireless telecommunication network node. If it is determined that this is the case and that that wireless node is currently in an idle mode then a wake up signal is sent.

The location indicator signal may be received directly from the user equipment at the larger network node, or it may be received at the larger network node via the smaller network nodes, perhaps via the backhaul link.

It should be noted that the smaller network nodes are any network nodes that have a radio coverage cell that falls either partially or completely within a larger network node's cell. Thus, the larger network node may be a base station of a macro cell which typically has a radio coverage cell with a radius varying from several hundred metres to over a km, and the smaller cell may be a small cell with a small cell base station the small cell having a radius of less than a hundred meters, typically 60 - 70 metres, or it may be a micro, metro, femto or pico cell. Alternatively the larger network node may be a small cell base station with the smaller cell being a micro, metro, femto and/or pico cell for example.

In some embodiments said wake up signal is transmitted via a backhaul communication link between said larger and said at least one smaller wireless telecommunication network node for transmitting backhaul signals between said network nodes.

Network nodes generally have backhaul links which allow the transmission of data received from the user equipment to further points on the network. These may be wired backhaul communication links and for larger network nodes such as macro cells this is generally the case. However, for some smaller cells the backhaul communication link may be wireless. Using this link to transmit the wake up signal allows the reception circuitry used to detect radio signals from user equipment to be powered down in an idle base station and yet still be woken up when required.

In some embodiments said method comprises the initial steps performed during an initialisation phase of: transmitting a wake up signal to said at least one smaller wireless telecommunication network node; receiving at said larger network node a plurality of RF fingerprint signals from a plurality of user equipment within said larger cell; determining said network node radio coverage data indicating radio coverage of at least some of said plurality of wireless transmission network nodes from said RF fingerprints and storing said network node coverage data.

The network node radio coverage data may be collected during an initialisation phase in which the smaller network nodes are woken up and RF fingerprints from user equipment are received and analysed. In this regard user equipment that are being served by a network node periodically transmit RF fingerprint data to the network node. This data includes power signatures indicating the strength of the signal that the user equipment is receiving from different network nodes. By collecting and storing this data during this initialisation phase, an indication of the radio coverage of the network can be derived.

In some embodiments, the method comprises the further step of having received sufficient data regarding radio coverage of one of said at least one wireless telecommunication network node, transmitting an idle enable signal to said at least one wireless telecommunication network node indicating to said at least one wireless telecommunication network node that it can transition to said idle state whenever it is not serving any user equipment.

When sufficient data has been collected regarding a network node, perhaps a predetermined amount of readings has been exceeded or a statistical analysis of the data indicates that several similar readings have been collected, then an idle enable signal is sent, this allows the network node to transition to idle mode whenever it does not need to serve user equipment. Thus, following initialisation the network node will only be active following a wake up call and while it has user equipment to serve.

In some embodiments, said step of storing said network node coverage data comprises storing said data in a hierarchical group structure, a larger cell and smaller cells located geographically within said larger cell being within a same group.

In some embodiments the network node coverage data is stored in a hierarchical group structure that is dependent on the cell coverage of the network nodes, with cells with the larger coverage having the highest hierarchy and being grouped with smaller cells covering a subset of the area of the larger cell. Storing the data in this way makes the searching for an appropriate network node quick and efficient as only a subset of the data needs to be considered and compared with the received location indicator signal.

In some embodiments said location indicator signal comprises an RF fingerprint comprising power signatures of radio signals received by said user equipment from at least some of said plurality of wireless telecommunication network nodes.

Although the location indicator signal can be a number of things, such as a timing base fingerprint where timing delays for receiving signals from different base stations are used as a location indicator, preferably an RF or radio frequency fingerprint is used. These are sent by the user equipment periodically in any case and provide information on the strength of the different signals from the different base stations which can be used to identify a location. Furthermore, as these signals are used in initialisation the data stored can be updated with the collected location indicator data. Furthermore, the received location indicator RF fingerprints can be compared with the stored RF fingerprints to determine a suitable network node and even where a base station is in idle mode and not transmitting any signal, the location of the user equipment relative to that base station can be derived by comparing the RF fingerprints from the other base stations with the stored data for these base stations, where this data was stored at a time when the now idle base station was active and transmitting.

In some embodiments, a network state indicating which of said plurality of wireless telecommunication network nodes are currently idle is derived from said location indicator signal and used in said determining step.

It is advantageous to use signals from many base stations when determining location. However, where some base stations may be periodically idle then it is advantageous to determine this, such that the absence of the signal can be taken into account when determining location.

In some embodiments, said location indicator signal comprises a time indicator indicating a time that said measurement was made.

Where location indicator signals are periodically sampled an indication of the time the signal was received can be helpful in determining the movement of the user equipment and also in increasing the accuracy of the location determination.

In some embodiments, said determining step further comprises determining a current mobility of said user equipment and determining whether it may be advantageous for at least one of network efficiency and providing a good service for said user equipment, for said user equipment to connect to one of said at least one smaller wireless telecommunication network nodes from said current mobility, said location indicator and said network node coverage data.

Another factor that is relevant when assessing which network node is best suited to serve user equipment may be the current mobility of that equipment. Where the user equipment is moving fast, then given the dimensions of the smaller cells it may not be appropriate for that user equipment to perform a handover and connect to a smaller cell even if the signal from that cell is stronger. As the larger network node may be able to assess mobility it can use this information when determining whether to wake up a smaller cell or not, thereby decreasing the number of occurrences where a network node is woken up unnecessarily.

In some embodiments, said method further comprises receiving data from said at least one smaller wireless telecommunication network node indicative of a current power capacity of said at least one smaller wireless telecommunication network node, said determining step comprises determining whether said user equipment could be better served by one of said at least one smaller wireless telecommunication network nodes from said received current power capacity, said location indicator and said network node coverage data.

Another factor in the decision of which network node is best suited to serve the user equipment may be the current power capacity of the smaller network node. Where the smaller network node is remotely powered by for example, a battery or solar cell, then this too may be a factor in whether or not the network node should serve a user equipment and thus, it may be advantageous if this information is transmitted to the larger network node that can take account of it when making its selection.

In some embodiments said method comprises the further steps of: receiving at least one of a further location indicator signal and a false wake up alarm signal from one of said at least one smaller wireless telecommunication network node, said false wake up alarm signal indicating that said one of said at least one smaller wireless telecommunication network node received a wake up signal when no user equipment required a connection from it; and updating said network node coverage data in response thereto.

User equipment will periodically transmit location indicator signals such as RF fingerprint data and this can be used by the larger network node not only to determine a location of the user equipment relative to various network nodes but also to update the network node radio coverage data. In this way the system can continually learn and improve its performance. Furthermore, it may be advantageous if when a smaller network node is awoken unnecessarily, that is it does not detect user equipment requiring a connection within a predetermined time following wake up, then an indication that the wake up was a false wake can be transmitted to the larger network node allowing it to update its network node coverage data and help avoid this error occurring again.

A second aspect of the present invention provides a wireless telecommunication network node configured to provide radio coverage within a larger cell and being located within a wireless network comprising a plurality of wireless telecommunications network nodes, at least one of said plurality of wireless telecommunication network nodes comprising a smaller network node providing radio coverage within a smaller cell than said larger cell, said smaller cell being located at least partially within said larger cell; said wireless telecommunication network node comprising: circuitry operable to receive a location indicator signal from user equipment within said larger cell, said location indicator signal providing an indication of a location of a user equipment relative to at least some of said plurality of wireless telecommunication nodes; a data store for storing network node coverage data indicating areas provided with radio coverage by at least some of said plurality of wireless telecommunication network nodes; analysing logic operable to determine from said location indicator signal and from said network node coverage data whether it may be advantageous for at least one of network efficiency and providing a good service for said user equipment to connect to one of said at least one smaller wireless telecommunication network nodes, and if so whether said one of said at least one smaller wireless telecommunication network nodes is currently in an idle state; and if so controlling transmission logic to transmit a wake up signal to said one of said at least one smaller wireless telecommunication network nodes.

A third aspect of the present invention provides a power control method for controlling a state of a wireless telecommunication network node, said wireless telecommunication network node providing radio coverage within a smaller cell and being located within a wireless network comprising a plurality of further wireless telecommunications network nodes, at least one of said plurality of further wireless telecommunication network nodes comprising a larger network node providing radio coverage within a larger cell than said smaller cell, said smaller cell being located at least partially within said larger cell, said wireless transmission network node having an active state during which radio transmission circuitry for transmitting radio signals is powered and an idle state during which said radio transmission circuitry is powered down, said power control method comprising: receiving a wake up signal from said larger network node via a backhaul communication link between said larger network node and said wireless telecommunication network node; controlling said wireless telecommunication network node to move to said active state in response to receipt of said wake up signal.

The idle state of smaller network nodes may be controlled from larger network nodes whose radio coverage at least partially overlaps with their own. The larger network node can be empowered with providing the smaller network node with a wake up signal when it is required, which allows the smaller network node to enter an idle state where it can be almost completely powered down as it does not need to transmit any signals or monitor for user equipment radio signals, all it needs is to be able to detect a wake up signal sent via the backhaul communication link.

In many cases this may be a wired link, meaning that detection of the signal does not require powering of any detection circuitry.

In some embodiments the method comprises the further step of: in response to receiving a location indicator signal such as an RF fingerprint from a user equipment, said location indicator comprising at least one power signature of at least one radio signal received from at least one of said plurality of wireless telecommunication network nodes, transmitting said location indicator signal to said one of said plurality of wireless telecommunication nodes via said backhaul communication link.

The larger network node may determine the location of the user equipment relative to the smaller network node using location indication signals such as RF fingerprint data received from user equipment that it is serving. Where the smaller network node is serving user equipment it will receive this data and in some embodiments it will forward this data to the larger network node that can use it to update its stored network coverage data.

In some embodiments the method comprises a further step of following transitioning to said active state in response to said wake up signal, determining whether there is a user equipment requesting a connection and if no user equipment is detected transmitting a false wake up alarm signal to said larger network node.

Where the network node is woken up and there is no user equipment to serve, then it may transmit an indication of this to the larger network node, allowing that to update its data and in effect learn from this mistake.

In some embodiments the method comprises: an initial step of receiving said wake up signal and transmitting a radio signal in response to said wake up signal; receiving an idle mode enable signal and in response to said idle mode enable signal transitioning from said active state to said idle state whenever said wireless telecommunication network node is not currently serving a user equipment.

In some cases there may be an initialisation phase where information regarding the signals from the smaller network nodes when they are powered is gathered by the larger network node and stored as network node radio coverage data. This requires the smaller base stations to continuously transmit a radio signal, once the larger network has gathered enough information it may transmit an idle mode enable signal indicating this phase is over, following this the smaller network node may transition to idle mode whenever it is not serving user equipment.

In some embodiments, the method comprises a further step of transmitting data regarding a current power capacity of said wireless telecommunication network node to said larger network node via said backhaul link.

Where the power capacity of the smaller network node is limited as may often be the case where for example it is powered by a battery or a solar cell for example, it may be advantageous if it can indicate its current capacity to the larger network node which can take this into account when selecting a network node and avoid selecting one that has little current capacity where there are good alternatives.

A fourth aspect provides a wireless telecommunications network node configured to provide radio coverage within a cell, said network node being located within a wireless network comprising a plurality of wireless telecommunications network nodes, said network node comprising: radio transmission circuitry for generating and transmitting a radio signal for reception by a user equipment located within said cell; reception circuitry for receiving a radio signal from said user equipment; a port operable to receive and transmit signals via a backhaul link between one of said plurality of wireless telecommunication nodes configured to provide radio coverage over a geographical area that is larger than said cell and includes at least a portion of said cell and said wireless telecommunication network node; said network node comprising power control logic for controlling a state of said network node, said network node having an active state during which said radio transmission and reception circuitry are powered and an idle state during which at least said radio transmission circuitry is powered down; said power control logic being configured to control said network node to transition from said idle to said active state in response to receipt of a wake up signal received at said port from said one of said plurality of wireless telecommunication nodes.

In some embodiments said power control logic is configured to determine when said network node is not currently serving any user equipment and in response to transition said network node from said active to said idle state.

In some embodiments said network node is configured to transmit data regarding a current power capacity of said network node to said one of said plurality of wireless telecommunication nodes via said backhaul link.

In some embodiments said radio reception circuitry is configured in response to receiving an RF fingerprint from a user equipment, said RF fingerprint comprising at least one power signature of at least one radio signal received from at least one of said plurality of wireless telecommunication network nodes, to transmit said RF fingerprint to said one of said plurality of wireless telecommunication nodes via said backhaul communication link.

A fifth aspect of the present invention provides a computer program which when executed by a computer causes said computer to perform the steps of the method of the first or third aspects of the present invention.

A sixth aspect of the present invention provides a computer program product comprising a computer program which when executed by a computer causes said computer to perform the steps of the method of the first or third aspects of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a network comprising a macro cell, small cells and femto cells according to an embodiment of the present invention;
Figure 2 schematically shows circuitry of a larger network node according to an embodiment of the present invention;
Figure 3 schematically shows circuitry of a smaller network node according to an embodiment of the present invention;
Figure 4 shows steps in a method performed by a larger network node according to an embodiment of the present invention; and
Figure 5 shows steps in a method performed by a smaller network node according to an embodiment of the present invention.

### DESCRIPTION OF THE EMBODIMENTS

### Overview

Before discussing the embodiments in any more detail, first an overview will be provided.

The present technique seeks to control the idle and active modes of a smaller network node remotely thereby reducing the power requirement of the smaller network node and allowing more centralized control such that other relevant factors such as the current loading of other available network nodes that can provide the service to the user equipment can also be considered.

In some embodiments mobile measurements in the form of *"RF fingerprints"* are exploited to identify if a mobile device or user equipment is within coverage of a sleeping cell. An RF fingerprint is a set of power measurements from all neighbouring cells, reported by a mobile device as a routine part of the operation. In other embodiments some other form of location identification is used to determine the same thing.

In the literature it has been shown that RF fingerprints can accurately determine the geographic location of a mobile to within a few metres. However doing this usually requires time consuming and expensive calibration (for example for indoor localization one approach is to build a fingerprint map for geographical locations using a measurement robot). In the present technique the calibration is not a problem as we only require information on the network topology (not directly linked to geography). This can be derived using for example, a learning phase, making this approach simple to deploy.

The concept of some embodiments of the proposed method consists of an initialization and an exploitation phase which are described below.

During the initialization phase all cells (macro and small cells) within the network are enabled and RF fingerprints are collected at an idle mode controller within the macro cell from mobile devices until the coverage area of all cells is sufficiently sampled. Once sufficient samples are available within a small cell's coverage, sleep mode control can be activated for this cell.

The idle mode controller then identifies the potential cell coverage for all active users based on matching the currently active cells (macro cells + small cells serving users) with the corresponding parts of the stored fingerprints.

Once, the potential serving cells are known for a user equipment (active cells can be measured, and idle cells are determined based on the fingerprints), the set of cells which serves all users with for example, the minimum required energy is calculated (e.g. using a global search or other optimization approach minimizing the energy cost function). The outcome determines the new active/idle state for all cells in the network. In doing so, various parameters such as users' bandwidth demand, as well as mobility behavior, can be additionally taken into account. For example, waking up a small cell for serving a highly mobile user may not be an optimal decision.

This process is repeated iteratively to adjust the network to the current traffic demand and user locations. The fingerprint data can be improved by collecting more measurements during operation.

The concept is broadly applicable to any cellular network consisting of cells for area coverage and small cells, such as for example UMTS and LTE.

In some cases the technique simply uses information that is reported by mobile devices anyway as part of the standardized mobility procedures, which makes it easy to implement.

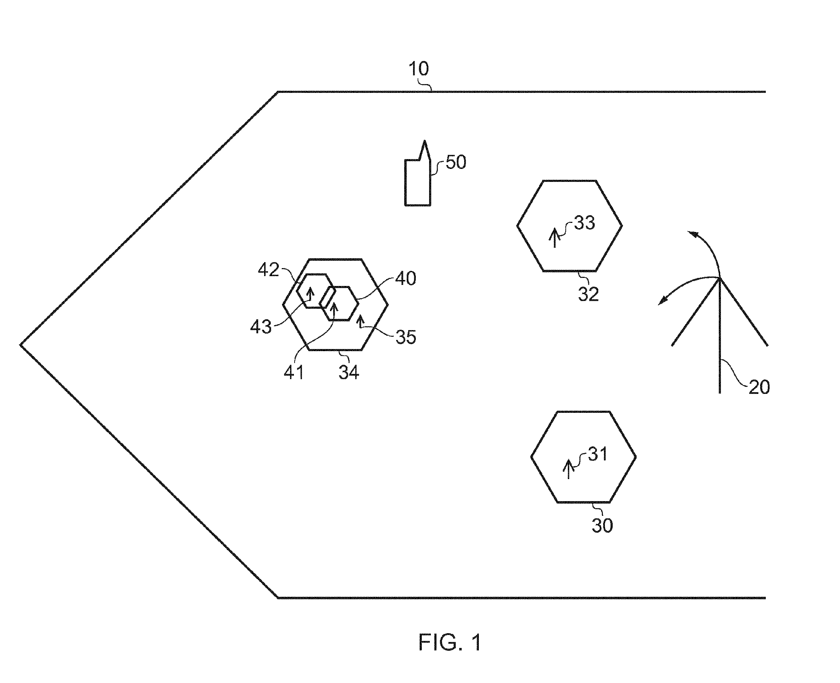

Figure 1 shows a network formed of a macro cell 10 and smaller cells 30, 32, 34, 40 and 42. Radio coverage within macro cell 10 is provided by base station 20. Within macro cell 10 there are other small cells 30, 32 and 34 with their own base stations 31, 33 and 35 respectively. Within small cell 34 there are femto cells 40 and 42 with their own femto base stations 41 and 43. There are backhaul communication links between the smaller base stations and base station 20 (not shown). The small cell base stations 31, 33 and 35 have wired backhaul communication links, whereas the femto cells 41, 43 have wireless backhaul communication links.

User equipment 50 within macro cell 10 that is currently served by base station 20 will be communicating data with this base station and will also periodically transmit RF fingerprints which provide an indication of the power signature of radio signals that it receives from nearby base stations. From this information, the base station 20 can determine whether there are any base stations that are providing a particularly strong signal and may be more suitable for serving the user equipment than the base station 20. In this regard, it will make this decision on the basis not only of the strength of the signals received by the user equipment, but also on the current loading of the macro cell and whether it is desirous for it to be able to offload some of its capacity to another smaller cell. Other factors such as the power capacity of the available small cells, their current mode and the mobility of the user equipment may also play a part in the decision.

Where the base station 20 determines that it should hand over its communication link with the user equipment 50 to one of the other base stations, then it will transmit a control signal to the user equipment and to the other base station to this effect.

In addition to using the RF fingerprint information to determine whether a handover is suitable, the base station 20 will have previously collected RF fingerprint information during an initialisation phase when all base stations are powered and will have stored this data as information regarding the radio coverage of the cells. Thus, during normal operation, if one of the base stations is in an idle mode and not currently transmitting any signal, the base station 20 can determine from the information collected previously, and from the RF fingerprint sent from the user equipment whether the user equipment 50 is currently located close to that idle base station and therefore whether waking up that base station may be desirable.

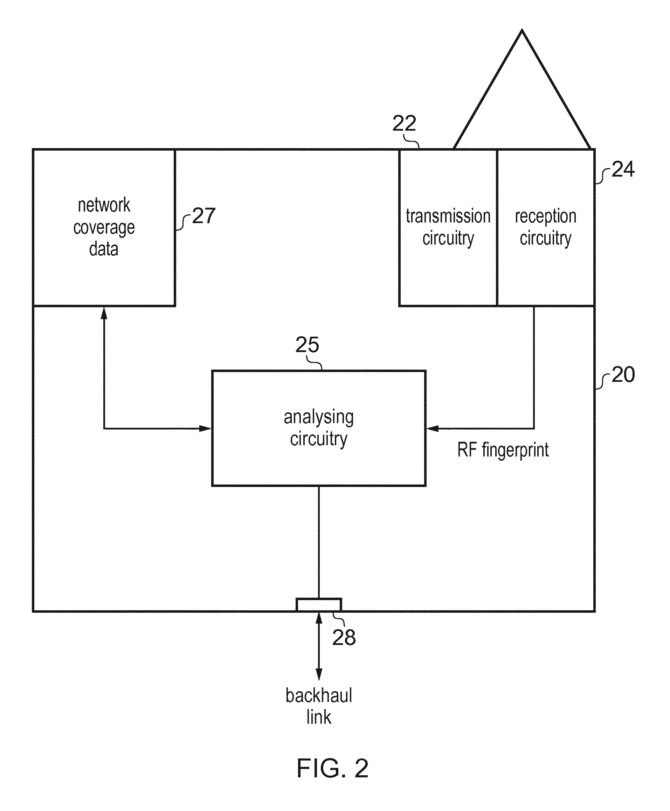

Figure 2 shows schematically circuitry within base station 20 and, in particular, the circuitry that is used by that base station to control the idle mode of the smaller base stations that provide radio coverage within, or at least partially within, its own cell.

Base station or network node 20 has transmission circuitry 22 and reception circuitry 24 for transmitting and receiving radio waves with user equipment. These signals include data signals and also the RF fingerprints transmitted from the user equipment and providing information regarding power signatures from local network nodes. This information is transmitted to analysing circuitry 25 which analyses the information and generates and/ or updates network coverage data, which is information regarding the strengths of signals received by user equipment from different network nodes. This data provides an indication of the geographical coverage of these network nodes and can be used to provide an indication of a location of a user equipment relative to certain network nodes. This network coverage data is stored in data store 27.

In addition to transmitting and receiving signals wirelessly, base station 20 also has a port 28 for receiving backhaul signals via a wired link. These backhaul signals are transmitted to and from other base stations. In this embodiment, port 28 has backhaul links to the base stations 31, 33 and 35. Wake-up signals can be sent along this backhaul link to the base stations 31, 33 and 35 indicating that they should exit idle mode. Base station 20 will select to send such signals where it determines that a user equipment is close to one of the base stations that is in idle mode and that the network will operate more efficiently if that base station serves that user equipment. Femto base stations 40 and 42 also have backhaul links which are not wired and if base station 20 wishes to send backhaul signals such as wake up signals to these base stations they will be transmitted wirelessly.

The backhaul links may also be used to receive information from these base stations. This information may be false wake-up indicators indicative of where a wake-up signal has been sent to the base station and the base station was not required by user equipment. Such a signal can be used to update the network coverage data and reduce the probability of a false wake up occurring again. Other information that can be received from the smaller base stations via the backhaul link may be RF fingerprint data that are received periodically from user equipment that the base stations are currently serving and can be sent to base station 20 where it can be used to update the network coverage data that is stored.

In this regard, in many embodiments the network coverage data is initially generated during an initialisation phase where a wake-up signal is sent to all the base stations and information is collected from different user equipment and stored. Once sufficient data has been collected to provide good network coverage data, an idle enable signal is transmitted via the backhaul link to the base stations and they can then enter idle mode when they are not currently serving user equipment. They will be woken up in response to a wake-up signal transmitted from the network node 20. In this way, the idle modes of these smaller base stations is controlled centrally in the larger base station 20. This is very power efficient for the smallet base stations as in idle mode the smaller base stations only need to detect wake-up signals via the backhaul link and are not being required to transmit either a pilot signal or to detect radio waves received from user equipment. The centralised control also helps avoid unnecessary wake-ups. Furthermore, by continually updating the radio coverage network data using signals received both from the smaller base stations and from user equipment, the number of times a smaller base station is woken up unnecessarily can be reduced and the system can continually improve and be kept up to date.

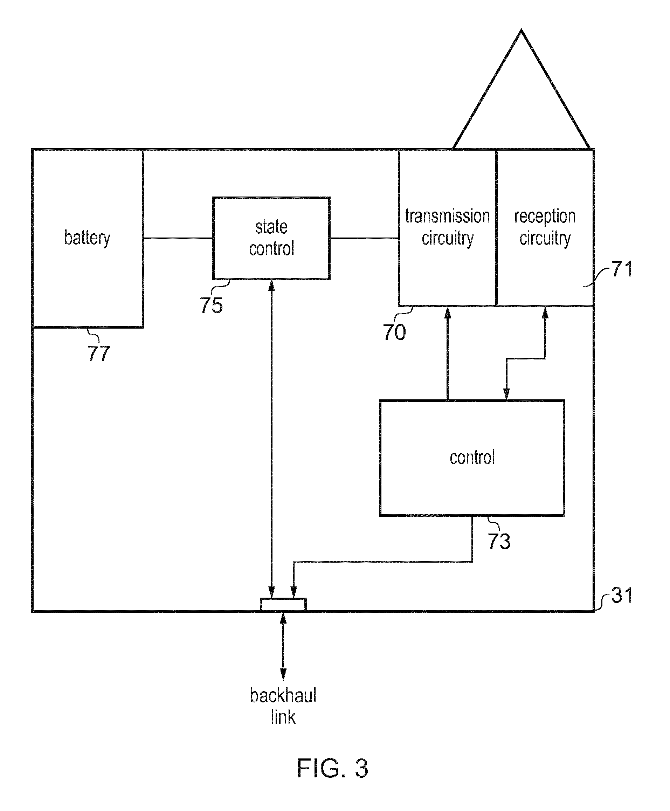

Figure 3 shows schematically circuitry within one of the smaller base stations 31 according to an embodiment of the present invention. The base station 31 has transmission and reception circuitry 70 and 71 respectively, for transmitting and receiving wireless communications with user equipment. It also has control circuitry 73 for controlling the signals received and transmitted, and for transmitting any RF fingerprint data received via the back haul link to the base station 20.

Base station 31 also has state control circuitry 75 for controlling the state of the system and, in particular, whether it is in an active or idle state. This state control circuitry 75 is connected to a battery 77 which powers the base station 31. The state control circuitry will monitor the current capacity of the battery and may transmit information regarding this via the backhaul link to the larger network node 20.

The state control circuitry 75 will receive signals from base station 20 via the backhaul link which will indicate to it whether the base station 31 should be in an idle mode where transmission and reception circuitry 70, 71 are powered down, or an active state where they are powered up. These signals include a wake-up signal indicating it should transition from the idle mode to the active mode. There is also an idle mode enable signal that may be received which indicates to the state control circuitry that when it is in active mode, and the transmission and reception circuitry are not serving user equipment then it should transition to the idle mode.

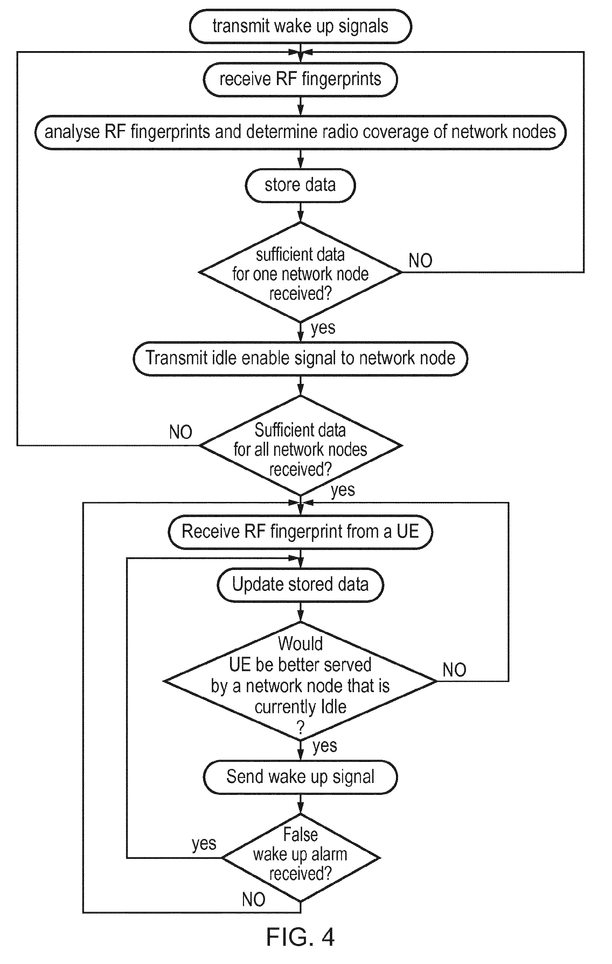

Figure 4 illustrates steps in a method performed by a larger network node such as base station 20 according to an embodiment of the present invention. During an initialisation phase the larger network node will transmit wake-up signals to the smaller network nodes and will receive RF fingerprints from user equipment either directly or via the smaller network nodes. It will, during this initialisation phase, analyse these RF fingerprints and determine the radio coverage of the various network nodes. The larger network node will then store this data in a grouped hierarchical structure, such that the network nodes covering the same geographical area are grouped together with the nodes having the larger cells having a higher hierarchy. It will then determine whether it has received sufficient data for a particular network node. If it has not, it will continue to analyse received RF fingerprints until it determines it has received sufficient data. At this point the larger network node will transmit an idle enable signal to that particular network node and will then determine whether it has received sufficient information from all of the network nodes. If it has not, then it will continue to receive RF fingerprints and repeat these steps until it has sufficient data received from all the network nodes. In this regard, when determining whether it has received sufficient data for a particular node, it may determine whether it has more than a predetermined number of data items for that node or it may perform a statistical analysis of the data items it has received from each node and where it has received a certain number of them that are similar it determines that it has sufficient to have confidence in this data.

When the larger network node has determined that it has received sufficient data for all network nodes it exits what is in effect the initialisation stage and enters the exploitation stage where location indicator signals which in this embodiment are in the form of RF fingerprints are received from UEs and are analysed. This data is used both to update the stored radio coverage data and to determine whether the UE should be served by a network node that is currently idle. If it determines that the UE should be served by a currently idle network node, then it will transmit a wake-up signal to that network node, whereas if it determines that it should not, it will continue to monitor RF fingerprints received from user equipment.

In some cases, when it sends a wake-up signal it may receive a false wake-up alarm signal in return which will indicate that the base station that has been woken up has not found any user equipment needing to be served and, thus, it has been woken up unnecessarily. In such a case this information can be used to update the stored radio coverage network node data which has clearly generated false information regarding the proximity of particular user equipment to a base station.

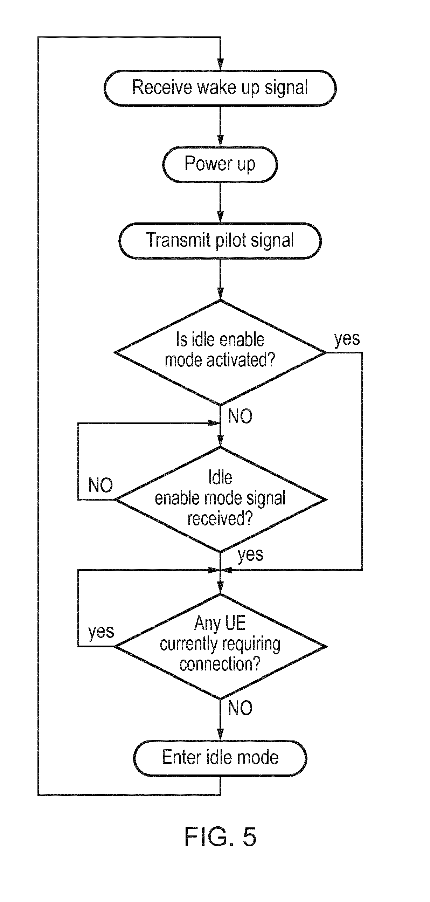

Figure 5 shows a flow diagram illustrating steps in a method performed by one of the smaller base stations whose idle mode is being controlled by a larger base station. The smaller network node will receive a wake-up signal and in response to this will power up. It will then start transmitting a pilot signal. It will then determine whether the idle enable mode is activated. If it is not, it will monitor for idle enable mode signals until it receives one. Once the idle enable mode is active, the smaller network node determines whether any user equipment currently requires a connection. If any do then it will serve that user equipment and continue to monitor this. If no user equipment does currently require a connection then the smaller base station will enter idle mode until it receives a subsequent wake-up signal.

A summary of the phases of an embodiment of the present technique and various enhancements is given below.

### Initialization phase:

(1) Initially when no RF fingerprinting information is available, all small cells need to be active, and the idle mode controller at the macrocell network records and stores samples of reported neighbour measurements (what is normally reported by UEs for handover purposes). For each location reported by a mobile such fingerprint consists of the received pilot powers of all macrocells and small cells. Since only the relationship between the different measurements is important and not the real geographic location, an expensive calibration process can be avoided.
(2) After sufficient fingerprints for a small cell are collected, the small cell idle mode control is enabled and the cell can be put into sleep mode (if not serving any user). This way, idle mode control is enabled gradually (=> exploitation phase) throughout the network until enabled for all cells.

### Exploitation phase:

(3) When mobiles report their neighbour list measurements of the macrocell measurements (small cell pilot transmissions are disabled in idle mode), they are compared with the corresponding measurements of the collected fingerprint measurements and the best match is found.
(4) From the best match, possible small cell serving candidates are determined based on the stored small cell measurements of the best matching fingerprint.
(5) Dependent on the load of the system and other parameters (e.g. battery state of cells, coverage by multiple cells such as femtocells and metrocells, user's mobility etc.) the network can trigger a wakeup for the most appropriate cell when necessary. For example if the macrocell network is lightly loaded (and is required to be on for coverage reasons), there is no need to power up small cells. Where small cells are required they are woken up via the backhaul connection (wired or wireless).
(6) If a new small cell is deployed after the initialization process, it remains active until sufficient fingerprint samples are collected.
(7) If a small cell is not activated for some time (e.g. if it is suspected that the wakeup is not working correctly) the cell can be activated and a new fingerprinting cycle for this cell is started.

In this way the present technique improves the wakeup procedure compared to a sniffer based solution by:
- Improving energy savings in multi-tier HetNets (heterogeneous networks) due to available global network information
- Avoiding unnecessary wakeup of multiple cells in multi-tier HetNets
- Avoiding false wakeups triggered by mobiles of other operators close by in a neighbouring frequency band, by being able to take only connected users and their measurements into account.
- Enabling consideration of other aspects such as users' mobility profile etc.

### Further enhancements:

(8) Once sufficient measurements are collected, the fingerprints are classified in a hierarchical group structure dependent on their cell coverage (e.g. one group for all fingerprints that are only covered by macrocell sector x, with subgroups for fingerprints in coverage of small cell y (located within the macrocell sector x), etc.). This allows a faster search, since not all fingerprints need to be compared with each measurement, but only the ones that are close by within the network.
(9) Collecting of measurement times in the fingerprint allows the use of temporal connection to further narrow down the possible matching fingerprints. Prioritizing them reduces the search time further.
(10) In addition to the macrocell signals, small cell signals can be part of the fingerprint. However since these cells can be either active or idle at any given time, the network state at the time of measurement is stored with the fingerprints. When matching, both the state at the measurement time, and the current network state is taken account to correlate only the parts of the fingerprint which correspond to currently active cells. Adding more and smaller cells in the fingerprint allows the accuracy of the location estimation within the network to be improved.
(11)The fingerprint collection process can remain active even after the initialization process to refine the fingerprint map. New fingerprints can replace old ones to ensure the map reflects the current network deployment.

In summary techniques according to embodiments of this invention provide a novel way of providing accurate information of UE positions within a cellular network. This enables network based idle mode control which addresses several shortcomings of existing distributed approaches as described above.

A key benefit of the proposed approach is the capability of self-calibration in the initialization phase, so that no expensive manual calibration is required (which is typical for applications where the physical user location is to be determined using RF fingerprints).

The proposed solution is standards compliant and in many cases relies on user measurements that are reported anyway for normal operation of cellular networks. It is applicable for GSM/ UMTS/ LTE/ etc. and all existing mobile phones.

Embodiments of this invention address several shortcomings of existing distributed wakeup approaches:
- Enables more accurate identification if a user is located within a small cell or not using standardized user reports that are available at the macrocell network.
- More efficient idle mode behavior in multi-tier networks and in low load scenarios since it allows taking global network information into account.
- Does not suffer from as many false wakeups caused by mobiles on adjacent carriers (e.g. from another operator)

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling an idle state of at least one smaller wireless telecommunication network node, said at least one smaller wireless telecommunication network node configured to provide radio coverage within a smaller cell and being located within a wireless network comprising a plurality of wireless telecommunications network nodes, at least one of said plurality of wireless telecommunication network nodes comprising a larger network node providing radio coverage within a larger cell than said smaller cell, said smaller cell being located at least partially within said larger cell, said method comprising
receiving a location indicator signal, said location indicator signal providing an indication of a location of a user equipment relative to at least some of said plurality of wireless telecommunication nodes;
determining from said location indicator signal and from network node radio coverage data stored in a data store in said larger network node whether it may be advantageous for at least one of network efficiency and providing a good service for said user equipment to connect to one of said at least one smaller wireless telecommunication network nodes and if so whether said one of said at least one smaller wireless telecommunication network nodes is currently in an idle state; and if so
transmitting a wake up signal to said one of said at least one smaller wireless telecommunication network nodes.

2. A method according to claim 1, wherein said wake up signal is transmitted via a backhaul communication link between said larger and said at least one smaller wireless telecommunication network node for transmitting backhaul signals between said network nodes.

3. A method according to claim 1 or 2, comprising initial steps performed during an initialisation phase of:
transmitting a wake up signal to said at least one smaller wireless telecommunication network node;
receiving at said larger network node a plurality of RF fingerprint signals from a plurality of user equipment within said larger cell, said RF fingerprint signals comprising power signatures of radio signals received by said user equipment from at least some of said plurality of wireless telecommunication network nodes;
determining said network node coverage data indicating radio coverage of at least some of said plurality of wireless transmission network nodes from said RF fingerprints and storing said network node coverage data.

4. A method according to claim 3, comprising a further step of having received sufficient data regarding radio coverage of one of said at least one wireless telecommunication network node, transmitting an idle enable signal to said at least one wireless telecommunication network node indicating to said at least one wireless telecommunication network node that it can transition to said idle state whenever it is not serving any user equipment.

5. A method according to claim 3 or 4, wherein said step of storing said network node coverage data comprises storing said data in a hierarchical group structure a larger cell and smaller cells located geographically within said larger cell being within a same group.

6. A method according to any preceding claim, wherein said location indicator signal comprises an RF fingerprint comprising power signatures of radio signals received by said user equipment from at least some of said plurality of wireless telecommunication network nodes.

7. A method according to any preceding claim, wherein a network state indicating which of said plurality of wireless telecommunication network nodes are currently idle is derived from said location indicator signal and used in said determining step.

8. A method according to any preceding claim, where said location indicator signal comprises a time indicator indicating a time that said measurement was made.

9. A method according to any preceding claim, wherein said determining step further comprises determining a current mobility of said user equipment and determining whether it may be advantageous for at least one of network efficiency and providing a good service for said user equipment, for said user equipment to connect to one of said at least one smaller wireless telecommunication network nodes from said current mobility, said location indicator signal and said network node coverage data.

10. A method according to any preceding claim, further comprising receiving data from said at least one smaller wireless telecommunication network node indicative of a current power capacity of said at least one smaller wireless telecommunication network node, said determining comprises determining whether said user equipment could be better served by one of said at least one smaller wireless telecommunication network nodes from said received current power capacity, said RF fingerprint and said network node coverage data.

11. A method according to any preceding claim comprising the further steps of:
receiving at least one of further location indicator signals and a false wake up alarm signal from one of said at least one smaller wireless telecommunication network node, said false wake up alarm signal indicating that said one of said at least one smaller wireless telecommunication network node received a wake up signal when no user equipment required a connection from it; and
updating said network node coverage data in response thereto.

12. A wireless telecommunication network node configured to provide radio coverage within a larger cell and being located within a wireless network comprising a plurality of wireless telecommunications network nodes, at least one of said plurality of wireless telecommunication network nodes comprising a smaller network node providing radio coverage within a smaller cell than said larger cell, said smaller cell being located at least partially within said larger cell;
said wireless telecommunication network node comprising
circuitry operable to receive a location indicator signal from user equipment within said larger cell, said location indicator signal providing an indication of a location of a user equipment relative to at least some of said plurality of wireless telecommunication nodes;
a data store for storing network node coverage data indicating areas provided with radio coverage by at least some of said plurality of wireless telecommunication network nodes;
analysing logic operable to determine from said location indicator signal and from said network node coverage data whether it may be advantageous for at least one of network efficiency and providing a good service for said user equipment to connect to one of said at least one smaller wireless telecommunication network nodes, and if so whether said one of said at least one smaller wireless telecommunication network nodes is currently in an idle state; and if so controlling transmission logic to transmit a wake up signal to said one of said at least one smaller wireless telecommunication network nodes.

13. A power control method for controlling a state of a wireless telecommunication network node, said wireless telecommunication network node providing radio coverage within a smaller cell and being located within a wireless network comprising a plurality of further wireless telecommunications network nodes, at least one of said plurality of further wireless telecommunication network nodes comprising a larger network node providing radio coverage within a larger cell than said smaller cell, said smaller cell being located at least partially within said larger cell, said wireless transmission network node having an active state during which radio transmission circuitry for transmitting radio signals is powered and an idle state during which said radio transmission circuitry is powered down, said power control method comprising:
receiving a wake up signal from said larger network node via a backhaul communication link between said larger network node and said wireless telecommunication network node;
controlling said wireless telecommunication network node to move to said active state in response to receipt of said wake up signal.

14. A wireless telecommunications network node configured to provide radio coverage within a cell, said network node being located within a wireless network comprising a plurality of wireless telecommunications network nodes, said network node comprising:
radio transmission circuitry for generating and transmitting a radio signal for reception by a user equipment located within said cell;
radio reception circuitry for receiving a radio signal from said user equipment;
a port operable to receive and transmit signals via a backhaul link between one of said plurality of wireless telecommunication nodes configured to provide radio coverage over a geographical area that is larger than said cell and includes at least a portion of said cell and said wireless telecommunication network node;
said network node comprising power control logic for controlling a state of said network node, said network node having an active state during which said radio transmission and reception circuitry are powered and an idle state during which at least said radio transmission circuitry is powered down;
said power control logic being configured to control said network node to transition from said idle to said active state in response to receipt of a wake up signal received at said port from said one of said plurality of wireless telecommunication nodes.

15. A computer program which when executed by a computer causes said computer to perform the steps of the method of any one of claims 1 to 11 and 13.

## Amended claims

### Amended claims in accordance with Rule 137(2) EPC.

1. A method performed at a larger wireless telecommunication network node (20) of controlling an idle state of at least one smaller wireless telecommunication network node (31, 33, 35, 41, 43), said at least one smaller wireless telecommunication network node configured to provide radio coverage within a smaller cell (30, 32, 34, 40, 42) and being located within a wireless network comprising wireless telecommunications network nodes, at least one of said wireless telecommunication network nodes comprising said larger network node providing radio coverage within a larger cell (10) than said smaller cell, said smaller cell being located at least partially within said larger cell, said method comprising
receiving a location indicator signal, said location indicator signal comprising one of: a radio frequency, RF fingerprint comprising power signatures of radio signals received by a user equipment (50) from a plurality of said wireless telecommunication network nodes and a timing base fingerprint comprising timing delays for receiving signals by said user equipment from a plurality of said wireless telecommunication network nodes, said location indicator signal providing an indication of a location of said user equipment relative to said plurality of said wireless telecommunication nodes;
determining from said location indicator signal and from network node radio coverage data stored in a data store in said larger network node whether it may be advantageous for at least one of network efficiency and providing a good service for said user equipment to connect to one of said at least one smaller wireless telecommunication network nodes and if so whether said one of said at least one smaller wireless telecommunication network nodes is currently in an idle state; and if so
transmitting a wake up signal to said one of said at least one smaller wireless telecommunication network nodes (31, 33, 35, 41, 43).

2. A method according to claim 1, wherein said wake up signal is transmitted via a backhaul communication link between said larger and said at least one smaller wireless telecommunication network node for transmitting backhaul signals between said network nodes.

3. A method according to claim 1 or 2, comprising initial steps performed during an initialisation phase of:
transmitting a wake up signal to said at least one smaller wireless telecommunication network node;
receiving at said larger network node a plurality of radio frequency RF fingerprint signals from a plurality of user equipment within said larger cell, said RF fingerprint signals comprising power signatures of radio signals received by said user equipment from said plurality of said wireless telecommunication network nodes;
determining said network node radio coverage data indicating radio coverage of said plurality of said wireless transmission network nodes from said RF fingerprints and storing said network node radio coverage data.

4. A method according to claim 3, comprising a further step of having received sufficient data regarding radio coverage of one of said at least one wireless telecommunication network node, transmitting an idle enable signal to said at least one wireless telecommunication network node indicating to said at least one wireless telecommunication network node that it can transition to said idle state whenever it is not serving any user equipment; wherein sufficient data comprises one of: more than a predetermined number of data items or data where a statistical analysis of said data indicates a certain number of similar data items.

5. A method according to claim 3 or 4, wherein said step of storing said network node radio coverage data comprises storing said data in a hierarchical group structure, such that a larger cell and smaller cells located geographically within said larger cell are within a same group.

6. A method according to any preceding claim, wherein a network state indicating which of said wireless telecommunication network nodes are currently idle is derived from said location indicator signal and used in said determining step.

7. A method according to any preceding claim, where said location indicator signal comprises a time indicator indicating a time that said location indicator signal was received at said user equipment.

8. A method according to any preceding claim, wherein said determining step further comprises determining a current mobility of said user equipment and determining whether it may be advantageous for at least one of network efficiency and providing a good service for said user equipment, for said user equipment to connect to one of said at least one smaller wireless telecommunication network nodes from said current mobility, said location indicator signal and said network node radio coverage data.

9. A method according to any preceding claim, further comprising receiving data from said at least one smaller wireless telecommunication network node indicative of a current power capacity of said at least one smaller wireless telecommunication network node, said determining comprises determining whether said user equipment could be better served by one of said at least one smaller wireless telecommunication network nodes from said received current power capacity, said RF fingerprint and said network node radio coverage data.

10. A method according to any preceding claim comprising the further steps of:
receiving at least one of further location indicator signals and a false wake up alarm signal from one of said at least one smaller wireless telecommunication network node, said false wake up alarm signal indicating that said one of said at least one smaller wireless telecommunication network node received a wake up signal when no user equipment required a connection from it; and
updating said network node radio coverage data in response thereto.

11. A wireless telecommunication network node (20) configured to provide radio coverage within a larger cell (10) and being located within a wireless network comprising wireless telecommunications network nodes, at least one of said wireless telecommunication network nodes comprising a smaller network node (31, 33, 35, 41, 43) providing radio coverage within a smaller cell (30, 32, 34, 40, 42) than said larger cell, said smaller cell being located at least partially within said larger cell;
said wireless telecommunication network node (20) comprising
circuitry (24) operable to receive a location indicator signal from user equipment (50) within said larger cell (10), said location indicator signal providing an indication of a location of a user equipment (50) relative to a plurality of said wireless telecommunication nodes;
a data store (27) for storing network node radio coverage data indicating areas provided with radio coverage by said plurality of said wireless telecommunication network nodes;
analysing logic (25) operable to determine from said location indicator signal and from said network node radio coverage data whether it may be advantageous for at least one of network efficiency and providing a good service for said user equipment to connect to one of said at least one smaller wireless telecommunication network nodes, and if so whether said one of said at least one smaller wireless telecommunication network nodes is currently in an idle state; and if so controlling transmission logic to transmit a wake up signal to said one of said at least one smaller wireless telecommunication network nodes.

12. A computer program which when executed by a computer causes said computer to perform the steps of the method of any one of claims 1 to 10.
